# EUROPÄISCHE PATENTANMELDUNG

(11) **EP 1 574 931 A2**
(43) Veröffentlichungstag der Anmeldung: **14.09.2005**
(21) Anmeldenummer: 05004606.9
(22) Anmeldetag: 03.03.2005
(51) Int. Cl.: G06F 1/00

(54) **Selbstbedienungsgerät mit einer Dateneingabeeinrichtung und Verfahren zur Abfrage einer PIN**

(30) Priorität: 11.03.2004 DE 102004011805
(71) Anmelder: Wincor Nixdorf International GmbH, 33106 Paderborn (DE)
(72) Erfinder: Born, Torsten, 33813 Oerlinghausen (DE)

(57) **Zusammenfassung**

Ein Selbstbedienungsgerät und ein Verfahren zur Abfrage und Bestimmung einer von einem Benutzer einzugebenen persönlichen, aus wenigstens einer oder mehreren Ziffern und/oder sonstigen Zeichen bestehenden Identifikationsnummer (PIN) an dem Selbstbedienungsgerät, wobei das Verfahren zumindest folgende mit Hilfe einer Rechnereinrichtung durchzuführende Schritte umfasst: eine Zufallsgenerierung einer Ausgangsziffer und eine Aktivierung eines korrespondierenden ersten Anzeigefeldes (C) der Anzeigeeinheit (B); eine Ermittlung von Navigationssignalen, die Bewegungen zwischen den verschiedenen Anzeigefeldern (C) der Anzeigeeinheit (B) entsprechen; und eine Ermittlung von Ziffern der PIN aus den ermittelten Navigationssignalen vom ersten zufallsgenerierten Anzeigefeld (C) bis zu einer ersten Ziffer der PIN nach einer Eingabebestätigung oder von Pinziffer zu Pinziffer (Fig. 1).

## Beschreibung

Die Erfindung betrifft ein Selbstbedienungsgerät mit einer Datenverarbeitungseinrichtung und einer an die Datenverarbeitungseinrichtung angeschlossenen Dateneingabeeinrichtung und ein Verfahren nach dem Oberbegriff des Anspruchs 6.

Selbstbedienungsgeräte sind beispielsweise in Form von Geldautomaten, Kontoauszugsdruckern sowie Informations- und/oder Transaktionsterminals in verschiedensten Ausführungen bekannt. Sie weisen im allgemeinen wenigstens eine Eingabevorrichtung und/oder wenigstens eine Ausgabevorrichtung auf, an denen der Benutzer etwas in das Selbstbedienungsgerät hineingibt, was entweder im Gerät verbleibt - wie z.B. Geldscheine bei einer Geldeingabe - oder von diesem wieder ausgegeben wird, so z.B. die Magnet- und/oder Chipkarte für die Autorisierung einer Transaktion. Unter Ausgabevorrichtungen werden dagegen Vorrichtungen verstanden, die dem Benutzer ausschließlich etwas ausgeben, so beispielsweise Geldscheine oder Kontoauszüge.

Neben den vorstehend beschriebenen Eingabe- und/oder Ausgabevorrichtungen weisen derartige Geräte oftmals auch noch Dateneingabeeinrichtungen zur manuellen Informationseingabe wie Tastaturen auf. Eine zentrale Aufgabe derartiger Dateneingabeeinrichtungen besteht in der Eingabe von Ziffern, z.B. zur Festlegung von an einem Automat auszuzahlenden Beträgen oder zur Eingabe einer persönlichen Identifikationsnummer, der sogenannten PIN.

Nach dem Stand der Technik erfolgt diese Dateneingabe - insbesondere die Eingabe der PIN - oftmals mittels sogenannter Sicherheitstastaturen (EPP), die über ein Eingabetastaturfeld sowie eine aufwendige und teure Sicherheitselektronik verfügen, welche dazu dient, die Eingaben an der Tastatur zu verschlüsseln und diese Eingabe dann in verschlüsselter Form an eine zentrale Rechnereinheit des Geldautomaten zu übertragen, damit keine Möglichkeit zur unbefugten Ermittlung der Ziffern der PIN z.B. über ein manipuliertes "Abhören" der Daten besteht.

Derartige Sicherheitstastaturen sind jedoch sehr kostenintensiv, so dass ein Bedarf nach kostengünstigen Dateneingabevorrichtungen für die Eingabe sicherheitsrelevanter Daten unter Beibehaltung eines hohen Sicherheitsstandards und einer komfortablen Eingabeart besteht.

Die Schaffung einer verbesserten Sicherheitstastatur für ein Selbstbedienungsgerät und eines einfachen Verfahrens zur Eingabe einer personenbezogenen aus wenigstens einer oder mehreren Ziffern und/oder sonstigen Zeichen bestehenden Identifikationsnummer (PIN) ist die Aufgabe der Erfindung

Die Erfindung löst diese Aufgabe in Hinsicht auf den Selbstbedienungsautomaten durch den Gegenstand des Anspruchs 1 und in Hinsicht auf das Datenverarbeitungsverfahren durch den Gegenstand des Anspruchs 6.

Die Erfindung schafft einen Selbstbedienungsautomaten mit einer Datenverarbeitungseinrichtung und einer an die Datenverarbeitungseinrichtung angeschlossenen Dateneingabeeinrichtung, die eine Anzeigeeinheit mit einer Mehrzahl von insbesondere beleuchtbaren Anzeigefeldern zur Anzeige mehrerer Ziffern und/oder sonstiger Zeichen sowie ein Eingabemittel aufweist, mit dem zumindest eine navigationsartige Ansteuerung beliebiger Anzeigefelder der Anzeigeeinheit und eine Eingabebestätigung realisierbar ist. Die Datenverarbeitungseinrichtung ist mit der Anzeigeeinheit und dem Eingabemittel verbunden und ermittelt eine aus wenigstens einer oder mehreren Zif fern und/oder sonstigen Zeichen bestehende Identifikationsnummer (PIN) aus dem zurückgelegten Navigationsweg zwischen den Anzeigefeldern. Es wird somit die PIN nicht direkt durch Eingabe der entsprechenden Ziffer ermittelt, sondern über eine indirekte Eingabe anhand des Weges zwischen einem ersten Anzeigefeld und der gewünschten Zielziffer. Durch eine zufallsgesteuerte Auswahl des ersten Anzeigfeldes ergeben sich für eine PIN immer unterschiedliche Navigationswege, da der Startpunkt immer eine andere Ziffer ist. Daher ist eine Verschlüsselung der PIN auf dem Weg zwischen der Eingabevorrichtung und dem Hostrechner nicht erforderlich, da aus einem Abhören der Wegkoordinaten in relativen Koordinaten wie rechts, links, oben, unten keine Rückschlüsse auf die eingegebene Ziffernfolge gezogen werden können. Da die generierte Zufallszahl bekannt ist, kann der Host aus den übermittelten Wegkoordinaten die Endziffer bestimmen.

Die Erfindung schafft auch ein Datenverarbeitungsverfahren zur Abfrage und Bestimmung einer von einem Benutzer einzugebenen Ziffer und/oder eines Zeichens, insbesondere für eine persönliche Identifikationsnummer (PIN) an einem Selbstbedienungsgerät, das zumindest folgende mit Hilfe der Datenverarbeitungseinrichtung durchzuführende Schritte umfasst: eine Zufallsgenerierung einer Ausgangsziffer und eine Aktivierung eines korrespondierenden ersten Anzeigefeldes der Anzeigeeinheit durch Beleuchtung; eine Ansteuerung eines Navigationsweges zwischen dem ersten Anzeigefeld und dem anzusteuernden Anzeigefeld durch ein Eingabemittel, eine Bestätigung des angesteuerten Anzeigefeldes mittels einer Eingabebestätigung (ENTER), eine Übertragung von Steuersignalen der Eingabemittel (D) zur Beschreibung des Navigationsweges in relativen Koordinaten an die Datenverarbeitungseinrichtung, wobei die Ziffer aus den übertragenen Steuersignalen ermittelt wird. Für die nächste Ziffer der PIN wird entweder der Navigationsweges von der ersten Ziffer der PIN oder von einer erneuten Zufallszahl bis zur zweiten Ziffer der PIN übertragen und nach einer Eingabebestätigung wird das Verfahren so lange fortgesetzt, bis alle Ziffern der PIN ermittelt worden sind.

Da nur relative Steuersignale wie rechts, links, oben, unten sowie Eingabebestätigungen und optional das Cancel-Signal zwischen der Eingabeeinheit und der zentralen Datenverarbeitungseinrichtung übertragen werden und da die Startziffer nicht festgelegt sondern zufallsgeneriert ist, können aus den von der Tastatur zur Datenverarbeitungseinrichtung übertragenen Signalen aufgrund der Vielzahl von Navigationsmöglichkeiten im Normalfall nicht die PIN-Zahlen ermittelt werden, obwohl die Übertragung der Signale unverschlüsselt erfolgt.

Die Anzeige der Ziffern ist insofern gegen Manipulationsversuche unkritisch, zumal beispielsweise zwischen die zur Hintergrundbeleuchtung der Anzeigeeinrichtung bevorzugt einsetzbaren LEDs und die eigentlichen Ziffernfelder Lichtleitelemente geschaltet sein können, so dass die LEDs weit von den eigentlichen Ziffernfeldern entfernt angeordnet werden können. Es ist ferner vorteilhaft, dass die Dateneingabe nur mittels weniger Tasten und insbesondere unter Einsatz einer Cursortaste erfolgt, da es so gut wie ausgeschlossen ist, die eingegebene Zahl über Handbewegungen eines Benutzers oder dgl. unbefugt zu ermitteln.

Vorzugsweise sind die Eingabefelder in zwei Richtungen - insbesondere matrixartig - auf der Anzeigeeinheit angeordnet, so dass eine Vielzahl von Navigationsmöglichkeiten zwischen zwei aufeinanderfolgenden PIN-Ziffern oder der ersten zufallsgenerierten Ziffer und einer anzusteuernden PIN-Ziffer bestehen, was ein Ausspähen oder "Abhören" der Navigationssignale mit hard- und softwaretechnischen Mitteln besonders schwierig macht. Da zudem die Startziffer bei der Navigation einem unbefugten Angreifenden nicht bekannt ist, kann dieser aus den Navigationssignalen allein zumindest bei kürzeren PIN-Zahlen keine besondere Schlüsse auf die PIN an sich ziehen.

Aus Kostengründen bietet es sich an, wenn die Eingabefelder kostengünstig und störungsanfällig als hintergrundbeleuchtete Ziffernanzeigen ausgebildet sind.

Das Eingabemittel wird zweckmäßigerweise eine Einrichtung zur Navigation auf den Anzeigefeldern, so z.B. eine Cursortaste oder einen Joystick, umfassen.

Ganz besonders bevorzugt ist das Eingabemittel als Tastatur ausgebildet, welche zumindest eine einzelne Cursortaste zur Navigation in mehreren Richtungen sowie vorzugsweise eine Entertaste und eine Canceltaste aufweist. Eine derartige Tastatur ist leicht bedienbar und besonders kostengünstig herstellbar, da sie nur wenige Tasten aufweist.

Es ist zweckmäßig, wenn die Rechnereinheit nach jeder oder mehreren ermittelten Zif fern der PIN eine neue zufallsgenerierte Zahl bestimmt und das entsprechende Anzeigefeld der Anzeigeeinheit aktiviert, um die Sicherheit gegen Manipulationen zu erhöhen.

Vorteilhafte Ausgestaltungen sind den Unteransprüchen zu entnehmen.

Nachfolgend wird die Erfindung unter Bezug auf die Zeichnung anhand eines Ausführungsbeispiels näher beschrieben. In der Zeichnung zeigt:
- Figur 1: eine schematische Ansicht einer erfindungsgemäßen Dateneingabevorrichtung; und
- Figur 2: eine Graphik zur Veranschaulichung der Funktion der Dateneingabevorrichtung nach Art der Fig. 1.

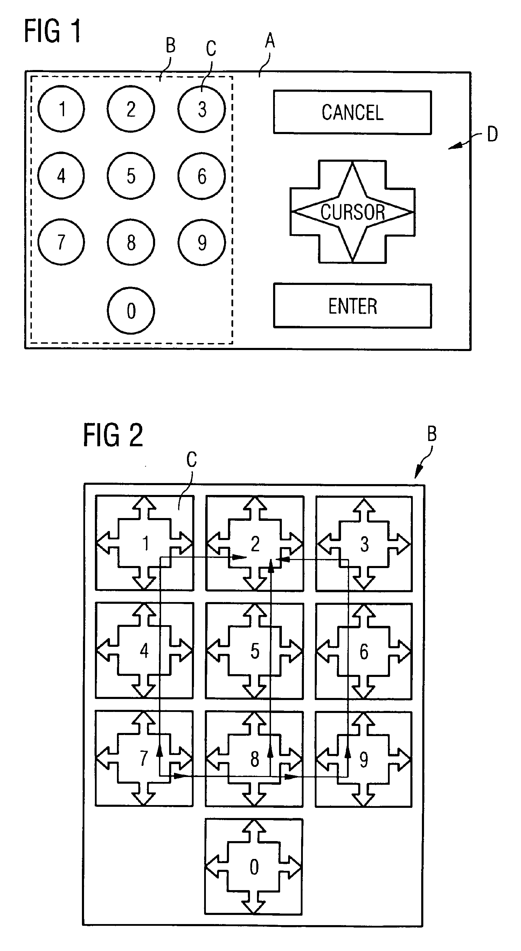

Figur 1 zeigt eine Draufsicht auf eine Dateneingabeeinrichtung A für einen Geldautomaten. Anstelle der nach dem Stand der Technik oftmals vorgesehenen Tastatur mit vielen Eingabetasten, denen jeweils ein Symbol, eine Ziffer und/oder ein Buchstaben zugeordnet ist, weist die Eingabeeinrichtung der Fig. 1 eine Anzeigeeinheit B und ein Eingabemittel D auf.

Die Anzeigeeinheit B besteht hier aus einer matrixartigen Anordnung von einzelnen Anzeigefeldern C, die hier den Ziffern 0 bis 9 entsprechen und einem Eingabemittel D mit hier nur drei Eingabetasten CURSOR, ENTER und CANCEL.

Die Anzeigefelder C werden z.B. auf einfache und kostengünstiger Weise durch hintergrundbeleuchtete Ziffern realisiert, die beispielsweise als transparente Bereiche in eine ansonsten lichtundurchlässige Kunststoff- oder Glasplatte eingebracht sind, wobei hinter den Ziffern jeweils eine Leuchtdiodenanordnung ausgebildet ist (hier nicht zu erkennen). Alternativ sind auch Anzeigeeinheiten sonstiger Art wie Displays usw. einsetzbar, auf denen dann entsprechende Anzeigefelder softwaretechnisch definiert werden.

Direkt seitlich neben dem Anzeigefeld B ist die Tastatur D mit den direkt übereinander angeordneten Eingabetasten CURSOR, ENTER und CANCEL angeordnet. Diese Tasten sind derart angeordnet und ausgestaltet, dass problemlos eine Einhandbedienung möglich ist.

Bei der mittleren Eingabetaste handelt es sich um eine CURSOR-Taste, die es erlaubt, zwischen den einzelnen Anzeigefeldern C zu navigieren. Die Anzeige folgt dabei den Bewegungen der CURSOR-Taste. Die untere ENTER-Taste dient hier zur Bestätigung einer Eingabe bzw. einer angesteuerten Ziffer und die obere Taste ist als CANCELTaste zur Deaktivierung einer Eingabe an der Entertaste ausgelegt.

Die eigentlichen Cursortasten können in beliebiger Art ausgestaltet sein. Nach dem in Fig.1 dargestellten Ausführungsbeispiel wird nur eine einzige Cursortaste eingesetzt, die in verschiedenen Navigationsrichtungen niederdrückbar ist (oben, unten, rechts links). Dies ist kostengünstig und besonders sicher gegen Versuche aller Art, die durchgeführten Handbewegungen zu erspähen. Alternativ könnten allerdings auch separate Cursortasten für zwei oder sogar für jede der möglichen Navigationsrichtungen vorgesehen sein oder es könnte z.B. die ENTER-Funktion mit in die Cursortastenfunktion integriert werden. Anstelle von Tasten könnten zur Navigation auch andere Navigationseinrichtungen für Datenverarbeitungsanlagen wie Joysticks oder dgl. am Selbstbedienungsgerät vorgesehen sein.

Durch die Ausgestaltung der Fig. 1 mit insgesamt drei Tasten ist sowohl eine einfache Verständlichkeit der Eingabetechnik als auch eine kostengünstige Ausgestaltung realisiert.

Anders als nach dem eingangs erläuterten Stand der Technik erfolgt die Datenübertragung zum Zentralrechner hier unverschlüsselt.

Um dennoch eine genügende Eingabesicherheit für die Daten, insbesondere die PIN, zur realisieren, werden nicht die eigentlichen Ziffersignale - z.B. in Form eines AS-CII-Codes - zur zentralen Rechnereinheit übertragen, sondern nur Steuersignale, die den Bewegungen bzw. Navigationen entsprechen, welche der Benutzer mit der Cursortaste zum Erreichen der den Ziffern seiner PIN entsprechenden Anzeigefeldern B durchführt sowie die Signale von der Enter- und der Canceltaste.

Dabei wird zunächst von der zentralen Rechnereinheit zufallsgeneriert eine Ausgangsziffer bestimmt und dann das entsprechende Anzeigefeld C beleuchtet, so dass ein Benutzer die Aktivierung der jeweiligen Ziffer leicht erkennt. Sodann führt der Benutzer ausgehend von dieser Ausgangsziffer eine Navigation zur ersten Ziffer seiner PIN durch, deren Erreichen er mittels der Entertaste bestätigt. Eingabekorrekturen ermöglicht die Canceltaste.

Dies sei an einem Beispiel näher erläutert.

Bei der Abfrage einer PIN - zum Beispiel nach der Eingabe einer EC-Karte in einen Geldautomaten - wird von der Rechnereinheit eine Programmroutine zur Abfrage und Ermittlung der PIN des Benutzers aktiviert. Dabei wird dem Benutzer z.B. an einem Bildschirm angezeigt, dass er seine PIN eingeben soll. Der Einfachheit halber sei angenommen, bei der PIN des Benutzers handelt es sich um die zweistellige Zahl 26.

Die zentrale Rechnereinheit bestimmt zunächst mittels einer Zufallsgeneratorfunktion eine Ausgangsziffer - z.B. die Ziffer "7" - und beleuchtet das entsprechende Anzeigefeld "7".

Der Benutzer wird jetzt zunächst mittels der Cursortaste eine Navigation von der "7" zur "2" durchführen und dann die Eingabe mittels der ENTER-Taste bestätigen.

Zur Durchführung der Navigation hat er verschiedene Möglichkeiten (siehe Fig. 2). Zum Beispiel kann sich der Benutzer ausgehend von der "7" über die "8" und dann die "5" zur "2"bewegen oder aber zum Beispiel über die "4" und die "1" zur "2". Daneben gibt es aber noch weitere Wege (zum Beispiel von der "7" über die "8", die "9", die "6" und die "3" zur "2"). Die jeweiligen Zahlen werden zweckmäßigerweise jeweils beleuchtet, wenn der Cursor auf sie trifft, so dass der Benutzer den zurückgelegten Weg verfolgen kann.

An der ersten Ziffer "2" der PIN angekommen, bestätigt der Benutzer seine Eingabe mit der "ENTER-Taste". Ausgehend von dieser ersten Ziffer der PIN führt der Benutzer dann auf einem beliebigen Weg die Navigation zur weiteren Ziffer der PIN durch und bestätigt seine Eingabe wiederum mit der Enter-Taste. Die Datenverarbeitungseinrichtung bestimmt sodann aus der Ausgangsziffer, den Steuersignalen (z.B. von der "7" über die "4" und die "3" zur "2": "oben", "oben, "rechts") nach der Betätigung der ENTER-Taste die erste PIN-Ziffer "2".

Es ist auch denkbar, nach jeder oder einer beliebigen Anzahl von eingegebenen Ziffern jeweils wieder eine zufallsgenerierte Ziffer von der zentralen Datenverarbeitungseinrichtung des Selbstbedienungsgerätes ermitteln und anzeigen zu lassen, um die Sicherheit weiter zu erhöhen.

Es ist ferner ebenfalls denkbar, ein diagonales Navigieren mit der Cursortaste zuzulassen, was die Anzahl möglicher einzuschlagender Wege zwischen zwei Anzeigefeldern weiter erhöhen würde.

Die Anzeigefelder C für die Ziffern können beliebig realisiert werden. Alternativ zur bevorzugten Ausgestaltung mit einer Platte mit transparenten Ziffern und LED-Hintergrundbeleuchtung könnten die Ziffern auch auf einem kleinen Display oder dergleichen angezeigt werden.

### Bezugszeichen

- Eingabe- und Anzeigeeinheit: A
- Anzeigeeinheit: B
- Anzeigeelemente: C
- Eingabetasten: CANCEL, CURSOR, ENTER,

## Patentansprüche

1. Selbstbedienungsgerät mit
- einer Datenverarbeitungseinrichtung und
- einer an die Datenverarbeitungseinrichtung angeschlossenen Dateneingabeeinrichtung (A) mit
i. einer Anzeigeeinheit (B) mit einer Mehrzahl von beleuchtbaren Anzeigefeldern (C) zur Anzeige von Ziffern und/oder sonstiger Zeichen, und mit
ii. einem Eingabemittel (D) zur navigationsartigen Ansteuerung der Anzeigefelder (C) der Anzeigeeinheit (B) und zur Bestätigung (ENTER) eines angesteuerten Anzeigefeldes,
- wobei die Datenverarbeitungseinrichtung mit der Anzeigeeinheit (B) und dem Eingabemittel (D) der Dateneingabeeinrichtung (A) verbunden und dazu ausgelegt ist, das angesteuerte Anzeigefeld (C) aus den Steuersignalen des Eingabemittels (D) beim Zurücklegen eines Weges zwischen einem beliebig wählbaren ersten Anzeigefeld (C') als Startpunkt und dem gewünschten Anzeigefeld (C) zu ermitteln.

2. Selbstbedienungsgerät nach Anspruch 1 oder 2, **dadurch gekennzeichnet, dass** die Anzeigefelder (C) matrixartig auf der Anzeigeeinheit (B) angeordnet sind.

3. Selbstbedienungsgerät nach einem der vorstehenden Ansprüche, **dadurch gekennzeichnet, dass** die Anzeigefelder (C) mittels einer Hintergrundbeleuchtung beleuchtbar sind.

4. Selbstbedienungsgerät nach einem der vorstehenden Ansprüche, **dadurch gekennzeichnet, dass** das Eingabemittel (D) eine Cursortaste oder einen Joystick aufweist.

5. Selbstbedienungsgerät nach einem der vorstehenden Ansprüche, **dadurch gekennzeichnet, dass** das Eingabemittel (D) zumindest eine Cursortaste sowie eine Entertaste und eine Canceltaste aufweist.

6. Verfahren zur Abfrage und Bestimmung einer von einem Benutzer einzugebenen Ziffer und/oder eines sonstigen Zeichens, insbesondere für eine persönliche Identifikationsnummer - PIN - an einem Selbstbedienungsgerät nach einem der vorstehenden Ansprüche, das zumindest folgende mit Hilfe der Datenverarbeitungseinrichtung durchzuführende Schritte umfasst:
- eine Zufallsgenerierung einer Ziffer oder eines Zeichens als Startpunkt und eine Beleuchtung eines korrespondierenden ersten Anzeigefeldes (C') der Anzeigeeinheit (B);
- eine Ansteuerung eines Navigationsweges zwischen dem ersten Anzeigefeld (C') und dem anzusteuernden Anzeigefeld (C) durch das Eingabemittel (D);
- eine Bestätigung des angesteuerten Anzeigefeldes (C) mittels einer Eingabebestätigung (ENTER);
- eine Übertragung von Steuersignalen der Eingabemittel (D) zur Beschreibung des Navigationsweges in relativen Koordinaten an die Datenverarbeitungseinrichtung; und
- eine Ermittlung der einzugebenden Ziffer aus den übertragenen Steuersignalen des Eingabemittels (D) von dem ersten zufallsgenerierten Anzeigefeld (C) bis zu dem angesteuerten Anzeigefeld (C).

7. Verfahren nach Anspruch 6, **dadurch gekennzeichnet, dass** die Rechnereinheit nach jeder oder mehreren ermittelten Ziffer der PIN eine neue zufallsgenerierte Ausgangsziffer bestimmt und das entsprechende Anzeigefeld (C) der Anzeigeeinheit (B) beleuchtet.

8. Verfahren nach Anspruch 6 oder 7, **dadurch gekennzeichnet, dass** in die Ermittlung der PIN Signale von einer Canceltaste einbezogen werden, mit der Eingabebestätigungen aufgehoben werden.
